# EUROPEAN PATENT APPLICATION

(11) **EP 0 622 021 A2**
(43) Date of publication of application: **02.11.1994**
(21) Application number: 94610022.9
(22) Date of filing: 25.04.1994
(51) Int. Cl.: A22B 3/00

(54) **Plant for the stunning of animals to be slaughtered, and a method for the operation of such a plant**

(30) Priority: 26.04.1993 DK 470/93; 04.11.1993 DK 1247/93
(71) Applicant: Slagteriernes Forskningsinstitut, DK-4000 Roskilde (DK)
(72) Inventor: Christensen, Leif Lykke, DK-3500 Vaerlöse (DK); Hansen, Flemming Rönholt, DK-4000 Roskilde (DK)
(74) Representative: Schoenning, Soeren

(57) **Abstract**

A plant for the stunning of animals to be slaughtered at a slaughterhouse, said plant comprising a system of boxes (4,113,114,115,132,133) which are movable between a filling area, in which the animals are led into a box, a stunning pit with an anaesthetic atmosphere for animals to be slaughtered and an area, in which the stunned animals are discharged from the box onto a table (9,116). The boxes (4,113,114,115,132,133) used are of the kind which share a common floor area, on which at least three animals to be slaughtered can move around. One wall (4a,126) of the box is openable in connection with the filling so that the animals can be led into the box. The wall (4b,125) of the box which is opposite the first wall, which has been opened in connection with the filling (4a,126), is opened in connection with the emptying of stunned animals from the box.

## Description

The present invention relates to a plant for the stunning of animals to be slaughtered at a slaughterhouse, said plant comprising a system of boxes which are movable between a filling area, in which the animals are led into a box, a stunning pit with an anaesthetic atmosphere for animals to be slaughtered and an area, in which the stunned animals are discharged from the box onto a table, which boxes share a common floor area, on which at least three animals to be slaughtered can move around, and a wall which is opened in connection with the filling so that the animals can be led into the box.

The invention also relates to a method for the stunning of animals to be slaughtered at a slaughterhouse in a plant comprising a system of boxes which are movable between a filling area, in which the animals are led into a box, a stunning pit with an anaesthetic atmosphere for animals to be slaughtered and a discharge area, in which the stunned animals are discharged onto a table, which boxes share a common floor area, in which at least three animals to be slaughtered can move around, and a wall which is opened so that the animals in connection with the filling can be led into the box.

Various systems are known for the stunning of hogs in an anaesthetic atmosphere of carbon dioxide. Normally, the system comprises a number of gondolas or boxes for the animals to be stunned. Each of the gondolas has only room for one or two animals, who are practically fixated in the gondola, the space being so limited that it allows no movement. In a commonly used type of gondola the animal enters at the end of the gondola, and when it has entered completely, the floor is swung down, the animal thereby falling somewhat downwards to rest fixedly against the slanting sidewalls of the gondola. Several gondolas are mutually connected in a so-called paternoster system, which ensures that the gondolas in turn are subjected to different phases of treatment. The first one is the driving in and fixation of an animal in the gondola. The next one is to lower a gondola with a fixated animal into a pit with stunning carbon dioxide. The last phase is to take up the gondola after the stunning of the animal on a level with a so-called discharge table, and the the stunned animal is discharged through one sidewall of the gondola and falls down on the table. An operator can then take care of suspending the animal in chains so that it can be transported by the conveyor of the slaughter line to a working position for stitching and blood draining.

Though such gondola systems are widely used, they do not provide a satisfactory treatment of the animals to be slaughtered, as - in particular in slaughter lines with a high slaughtering capacity - difficulties may arise in connection with the driving of the animals into the gondolas at the desired frequency.

A more satisfactory treatment of hogs is attained by using boxes with a shared floor area, in which three or more animals can move around. Such a system is disclosed in EP-A 0.441.633. In some of the embodiments one end wall or a sidewall of a box is opened in connecting with the driving of the animals into the box. When the box is filled, it is closed and taken to a waiting area. When needed, the box is lowered into a pit with stunning carbon dioxide. After some time in the pit, the animals have become stunned, and the box is taken up from the pit and to a discharge area. Here the end wall or the sidewall is opened again, and the stunned animals are discharged on a table, whereafter the empty box returns to the filling area. These embodiments of a box stunning system are most demanding as to space. In the other shown embodiments the animals are led into a box through an opening in one end wall. The box is emptied of stunned animals by opening of an adjacent sidewall. These embodiments are also very demanding as to space around the stunning pit, and besides, problems may arise in respect of constructing the boxes with sufficient strength, as it is imperative that two adjacent walls of one box are openable.

It has now turned out that a box stunning system can be constructed in a new, less space demanding way than the known box stunning system without any loss of advantages in respect of the treatment of the animals.

The plant according to the invention is new and characteristic in that a wall opposite the first wall, which has been opened in connection with the filling, is opened in connection with the emptying of stunned animals from the box.

By placing the two openable walls opposite one another in the box instead of simply using boxes with an openable wall or two openable walls, which adjoin one another, a substantially better lay-out of the system is achieved, the space requirements being less than in known box stunning systems. In the plant in question the space requirement is of the same order as in the known paternoster systems with gondoals for one or two animals, but with the stunning plant according to the invention the problems in connection with the driving in and the fixation of the animals in the gondolas are avoided.

A particularly advantageous embodiment, which is specifically economic as to space, is according to the invention characteristic by the subject matter of claim 2.

By lifting the boxes from the pit to a common station for the driving in and the discharging of the animals, any need for space for a transport path in the level, in which the animals are grouped, is eliminated. The plant, therefore, becomes most economic as to space requirement. Moreover, the cycle of the boxes becomes short, as there is no need for transport between the discharge of the stunned animals and the driving in of the next group of animals. With a stunning time of 60 seconds it becomes possible with groups of 5 animals and three boxes to reach a capacity of 400 animals per hour without dispensing with the "considerate" treatment of the animals, which are known from the known plant, and without having to put greater demand on the work load of the plant operator.

According to the invention it is in particular advantageous that the boxes are placed next to each other opposite the grouping area and that they are separately lowerable. In this arrangement will on one hand, when constructing the grouping area the experiences gained by the aforementioned known plant come in useful, on the other hand a practical, compact construction of the discharge area is attained, the discharge areas for the stunned animals being placed immediately next to each other, which makes it possible for one single operator to control them.

According to the invention it is advantageous that the boxes are moved in the pit only in approximately vertical direction, whereby they can be constructed as elevators which can be balanced substantially by means of counterweights and which can therefore be moved with a moderate application of engine power on the hoisting winch.

According to the invention the pit below the level of the grouping area has a substantially bigger horizontal cross section than the boxes. In this embodiment a mixing of the anaesthetic atmosphere with the atmosphere above the pit is prevented, whereby the need for supply of additional anaesthetic for maintaining the necessary concentration of anaesthetic is reduced.

In the cases, in which a reversible stunning of the animals is not considered satisfactory, and where, consequently, a substantially longer stay in the pit is required, it is desirable to use a bigger number of boxes than stations, as more than one box can be lowered in the pit opposite each station. According to the invention this is attained thereby that for each room in the grouping area two boxes are provided, which from the common station is lowerable to each theirs of two adjacent stunning positions at the bottom of the pit. In this embodiment it will be possible with a stunning time of 180 seconds and a total of six boxes and the known grouping area to stun 400 animals per hour without increasing the space requirement on level with the grouping area in relation to a plant with reversible stunning.

With a view to reducing the mixing of anaesthetic in the atmosphere prevailing at grouping area level, it is according to the invention preferable that the boxes in their uppermost position are surrounded by walls impeding air passage. In this embodiment the walls will in the uppermost position of the box cooperate therewith for the attainment of a cylinder-piston effect, said walls sucking by moving in an out of the uppermost position out the atmosphere prevailing at grouping area level out of the box and pressing this atmosphere into the box, respectively.

In order to prevent animals from inadvertently falling into the pit, when the box is lowered, a hoisting gate is place at the entrance of the stunning station.

To maintain an anaesthetic atmosphere in the pit it will be necessary to supply a certain amount of additional anaesthetic to the pit. The stunning plant is therefore provided with means for supplying additional anaesthetic, which is normally introduced in an area comparatively close to the bottom of the pit. According to the invention it will be advantageous to provide the boxes with an inlet for stunning medium, as an essential part of the additional stunning medium to the pit is supplied in the lowered position of the box. In this way it is ensured that particularly in the boxes, where the animals to be stunned are present, a high concentration of stunning medium will be attained, which will increase the degree of stunning.

According to a preferred embodiment the wall of the box opposite the entrance is adapted to be opened simultaneously with the tilting of the floor of the box.

To prevent the animals from falling or jumping out of the box, while it is lowered into the pit, the box is provided with a door adapted to be lowered for opening of the box entrance.

The method according to the invention is in a similar way new and characteristic in that a wall opposite the first wall, which has been opened in connection with the filling, is opened in connection with the emptying of stunned animals from the box.

It should be mentioned that the boxes can be transported about by means of a per se known paternoster system, but the transport may also take place by means of other transport systems, in which the pattern of movement and intervals of the boxes is pre-determined, or with more or less flexibility depending on the speed, with which the boxes are filled and emptied.

A particularly advantageous embodiment of the method according to the invention is characteristic in that the filling of the animals into a box and the emptying of the stunned animals from the box take place in a common station.

With a view to attaining the biggest possible capacity of the plant, the time intervals between the driving in of the animals into the boxes and the initiation of the stunning cycle can be coordinated in such a way that the time between the lowering of the boxes is set as half the cycle of one of the boxes less the sum of the grouping time and the filling time. Through this coordination a certain speeding up of the next and subsequent cycle will take place, a bigger period of time being at disposal for the following grouping, thus making it possible to end the grouping before the cycle of the first box is to be initiated.

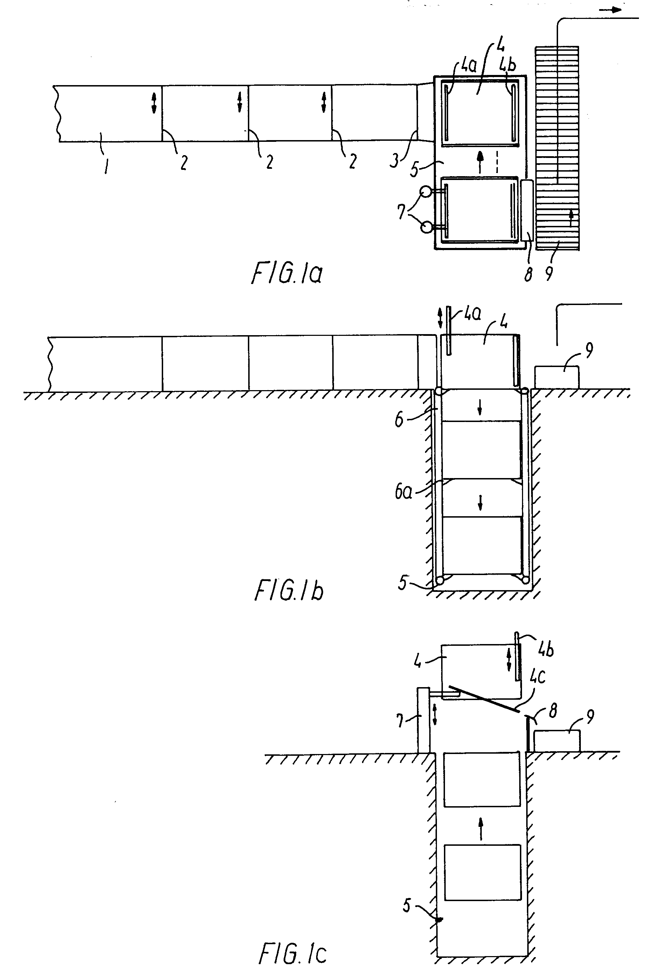

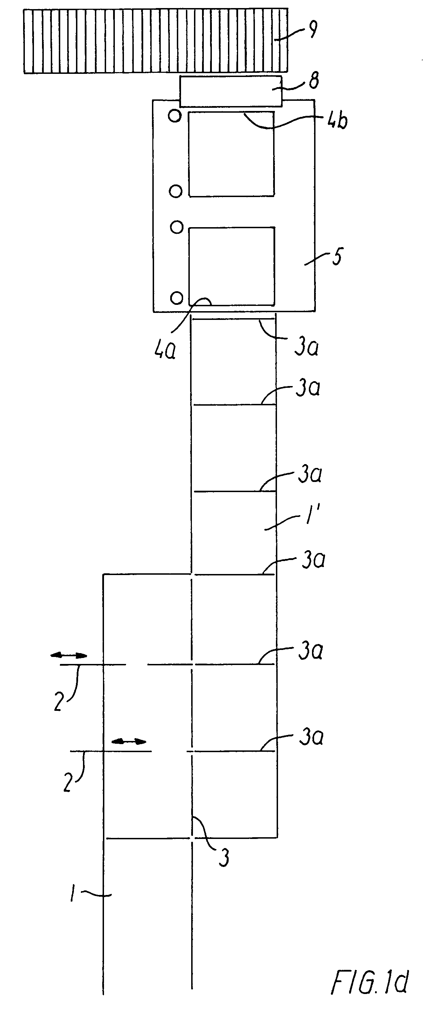

The plant and the method according to the invention will appear from the following description of various embodiments shown in the drawing, in which Figs. 1-7 show seven different embodiments. The first figure of an embodiment is always a plane view of the plant, while the following figures of an embodiment is a vertical section through the plant, and in which
Fig. 8 schematically shows a plant for the stunning of animals, seen in plane view,
Fig. 9 shows a section through the pit in a plant of the type shown in Fig. 1 and in which one of the boxes for the lowering of the animals is shown,
Fig. 10 shows a time table, from where the course of the process appears, and
Fig. 11 shows a section trough a plant for irreversible stunning of animals to be slaughtered.

The plant according to Figs. 1a, 1b, and 1c comprises a driving path 1 sufficiently wide for two or three hogs to walk aside. The animals are led in from the left and pass some completely or partially opened sliding doors 2, which divide the last part of the driving path in three areas with room for five hogs in each. If the sliding doors 2 are only opened so much that one hog at a time can pass through the opening, a separating effect on the group of animals is attained, said group being led in from the pen area of the slaughter house and typically comprising 15 animals. Besides, a more smooth and essentially unproblematic filling of the areas with the desired number of animals is achieved than if the sliding doors 2 were completely open. Preferably, the sliding door farthest to the left is completely open, while the two remaining ones are only partially open.

Each area has room for for instance five animals, but the system has been built up so tolerantly that it will also accept one animal more or less in an area, as it may be disturbing during operation, if a definite number of animals have to be present in each area. The sliding doors 2 are closed one at a time, so that 5 animals +/- 1 animal get into each area. It is not necessarily the front sliding door that is closed first, as also sliding door number two may close first, when a total of 10 animals in all is registered in the two foremost areas of the driving path 1. In this situation the foremost sliding does not close until the animals have dispersed in these two areas. The rearmost sliding door is closed, when all animals have been driven past. For registration of the filling of the areas weighing cells are for instance provided beneath each area, and these weighing cells may be connected with a computer which by means of a special algorithm registers, when the desired number of animals is present in an area. The computer then gives a signal to a control unit which automatically takes care of closing one or more sliding doors 2. The algorithm may comprise the above tolerance, which allows for a deviation of one animal in each area.

The registration of the filling of the area may also take place by means of video technique, a video camera being for instance placed above the two foremost or all three areas, and these cameras register the number of animals in each area by means of an image treatment and image interpretation programme in a connected computer. A third possibility for the registration of the filling of the areas is to arrange a detector, which counts the number of animals passing an open sliding door 2. The detector may be of the photoswitch type, in which the animals break a light beam, or of the nearness type, for instance an ultrasonic receiver receiving reflected ultrasound from an animal in motion, or a heat-sensitive detector sensing the heat radiation from an animal. One detector for each sliding door may be used or also one detector for each of the two last sliding doors.

The foremost area of the driving path 1 is barred by a sliding or hoisting gate 3. Behind the gate is the actual stunning system, which will be explained in the following.

The system comprises six boxes 4 with an entrance door (hoisting gate) 4a in the left side and a discharge door (hoisting gate) 4b in the right side. The boxes are movable into a pit 5 filled with a carbon dioxyde containing atmoshphere by means of an elevator system 6 (Fig. 1b) with circumferential angle stays 6a. At the bottom of the pit 5 a transport system (not shown) is provided, which pushes a box 4 in the direction of the dotted arrow in Fig. 1a from one end wall of the pit to the other end wall. Here an elevator system (not shown) is provided, said system working in the same way as the elevator system 6, but lifting boxes up from the pit. In the uppermost position a box is caught by a lifting arrangement 7, which raises the box 4 yet somewhat and engages one edge of the swingable bottom of the box in such a way that the bottom is tilted (Fig. 1c). A sliding device takes, after this operation, care of moving the box in the direction of the fully drawn arrow in Fig. 1a, the box returning thus to its starting position.

The six boxes are moved in a cycle between four different positions. In the first position the entrance door 4a is open, and animals from an area ahead of the driving path 1 can be driven into the box, for instance by means of a not shown driving/hoisting gate which is movable through the driving path. When the animals have entered the box, the entrance door 4a is closed, and the box is lowered into the pit by means of the elevator system 6. When the box with the animals has reached the bottom of the pit, the box is pushed in the direction of the dotted arrow in Fig. 1a, and the box is lifted up from the pit by means of the elevator system not shown. The lowering, the displacement and the lifting are carried out slowly in such a way that the time passing from the entering of the animals into the stunning atmosphere and until they leave the atmosphere corresponds to the stunning time, which depending on the form of stunning (lethal or non-lethal) may be 1 - 3 minutes.

When, after said time, the box again comes up from the pit 5 with the animals now stunned, it is lifted to the position seen on top of Fig. 1c. The discharge door 4b in the right side of the box is opened, and the bottom 4c of the box is swung to the shown oblique position, the animals thereby sliding out of the box over a intermediary slide 8 and down onto a chain suspension table 9. The table is a conveyor with a laminated surface. The stunned animals are conveyed quite slowly in the direction of the arrow and are suspended in chains by an operator, which places a chain noose around one hind foot of each animal. The chain is fastened to a common transport device hanging down from a sliding bar conveyor or the like which gradually on account of the displacement of the drop fingers of the transport device along the sliding bar lifts the body from the discharge table and takes it suspended in the chain to a stitching area.

It will be seen from Figs. 1a to 1c that normally four boxes are present in the stunning pit 5 at a time, while two boxes are present above the pit, one of which is filled with unstunned animals, while the other one is being emptied of stunned animals.

The animals in each of the three areas of the driving path 1 is gradually driven into boxes 4 of the stunning system while moving to the end of the driving path, each box being filled with all animals from one area. A not shown driving/hoisting gate performs the driving, but it may also be performed manually by an operator using a driving bat.

A new group of animals can then start filling the area of the driving path and the division into groups may start. When the filled box has been removed, the working procedure described above can be repeated with new animals.

The capacity of the system is fairly high, the animals are treated considerately, the space requirement is comparatively small on account of the practical separation of introducing the animals at one side of the pit 5 and of discharging the stunned animal at the opposite side of the pit.

Instead of six boxes, the system may have four boxes. The capacity can then later, if desired, be increased by adding two new boxes. Should the capacity still not be sufficient, the pit can be made longer or deeper, space being thus provided for for instance eight or more boxes.

The boxes 4 can be constructed to hold three or four animals, but they can also be made bigger to hold six, seven, or eight animals or even up to 15 animals. The pit may, if desired, be made bigger to give the animals a longer stunning time and/or to increase the capacity. Likewise, more or less boxes may be provided according to wishes and actual conditions at the slaughterhouse.

Fig. 1d shows a plan of a variant of the plant according to Figs. 1a - c. Between the pit 5 and the driving path 1, which contains the area in which the grouping takes place by means of sliding doors 2, said doors being shut when 5 animals are present in each of the three areas separated by the sliding doors 2, a driving path 1', which is parallel with the driving path 1, is provided. When the grouping has taken place, the doors 3 open, whereafter the animals are led into the parallel driving path 1'. In this driving path there is a number of driving/hoisting gates 3a, which can be moved stepwise towards the boxes 4. Like in the embodiment according to Figs. 1a - c the boxes are placed in a paternoster system in and above the pit 5. In the embodiment shown this system has, however, been turned 90° in relation to the system shown in Figs. 1a - c. Besides, it is working essentially in the same way.

The driving path 1' acts as a kind of buffer which can smooth the variations arising during the grouping of the animals in the driving path 1. It has thus been made possible that even if a single grouping procedure under otherwise favourable conditions takes up to the double of the time needed for filling three boxes, no operational trouble arises on that account.

It should be noted that the animals driven in from the folding area do not necessarily need to be divided in three groups. They may for instance be divided in two groups, or no grouping has to be done at all, as the size of the boxes for instance may correspond to the number af animals, which are driven in from the pens at a time. Finally, a continuous driving of animals from the pens may take place without any division between the animals from different pen areas. An operator may by means of a driving bat separate the foremost animals in the driving path and lead them into the empty box, or an automatic system can perform the same function, in which connection it is preferable to increase the distance between the individual animal, for instance by making the driving path 1 more narrow or by introducing narrowings in places in the driving path. By continuous driving from the pens without separation of the herd, the animals may also be divided in groups which each corresponds to the desired number of animals in each box. This is in particular of importance when the pens contain a varying number of animals, for instance 10 - 20 animals in each pen, or when each pen contains a big number of animals, for instance 20-80 animals, or the pen system is of a type which offers no opportunity of keeping animals from one section separated from the others during the driving. The last part of the driving path may in these cases be constructed in the same way as shown in Figs. 1a-1c with three sections, each holding a number of animals corresponding to the number of animals to be filled in a box. There may also be just two or one section each holding a number of animals corresponding to the content of a filled box.

The discharge side of the system may also be constructed in other ways than the one shown. The linear conveyor 9 with laminated surface may for instance be replaced by a circular or annular conveyor which returns an animal to the operator, should he have lost it in the first round. Furthermore, systems may be used which improve the separation of the animals which are discharged from a box, for instance of the type disclosed in Danish patent application no. 951/90.

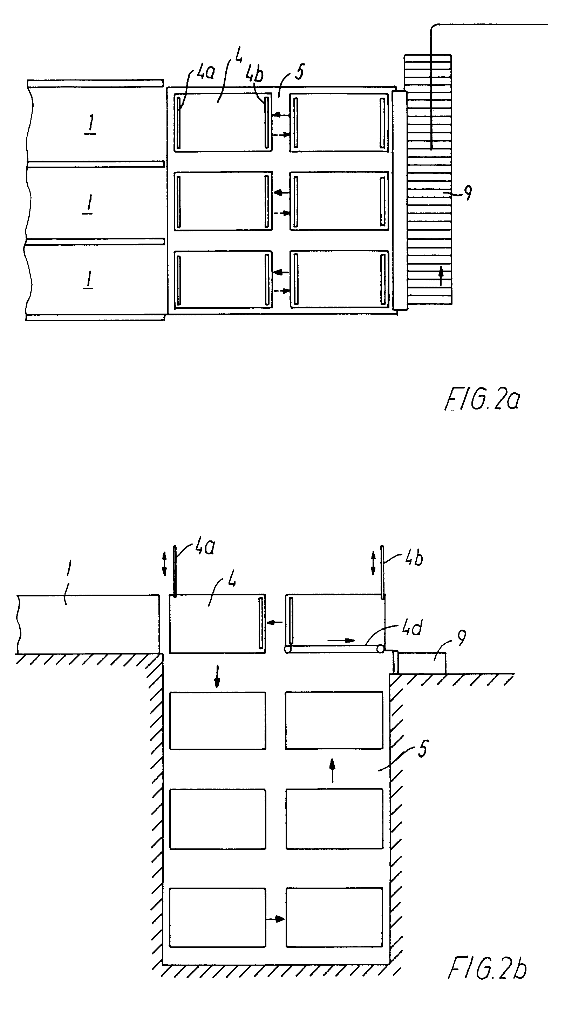

The plant according to Figs. 2a and 2b comprises a stunning pit 5 with three identical transport systems for transport of boxes 4 in a cycle comprising the filling of a box wiht animals, the lowering of a filled box into an anaesthetic atmosphere and emptying of a box of stunned animals. Each transport system may be constructed in the same way as in the plant according to Fig. 1, but it is also possible to use a paternoster system, by means of which the boxes are taken around in the cycle. The three identical transport systems are driven synchronously or independently from each other. It is preferred not to empty all the stunned animals at a time. Preferably the boxes are emptied with consistently displaced time intervals, whereby the operator who is to suspend the stunned animals in chains, gets an even supply of stunned animals.

Each system is provided with unstunned animals via a driving path 1 constructed or functioning in each of the ways described above with separation or without separation of the animals driven in from the pen area.

In Fig. 2b it will be seen that each box has an entrance gate 4a which has been lifted during the filling of the box with animals and a discharge gate 4b which is lifted during the emptying of the box. The boxes shown here have a horizontally movable bottom 4d instead of the tilted bottom 4c shown in Fig. 4c. The bottom consists of an endless conveyor belt running over two rollers, one of which or both of which engages a driving gear, when the box is in the uppermost right position shown in Fig. 2b. By means of the conveyor belt the stunned animals are taken to a discharge table 9 which may be constructed in the same way as the discharge table in the embodiment according to Fig. 1 or in any other way.

This plant has a higher capacity than the plant according to Figs. 1a-1c.

Instead of three driving paths the plant may for instance have two. If it is desired to retain the capacity of the plant, the boxes can be made bigger and adapted each to hold for instance 7-8 animals.

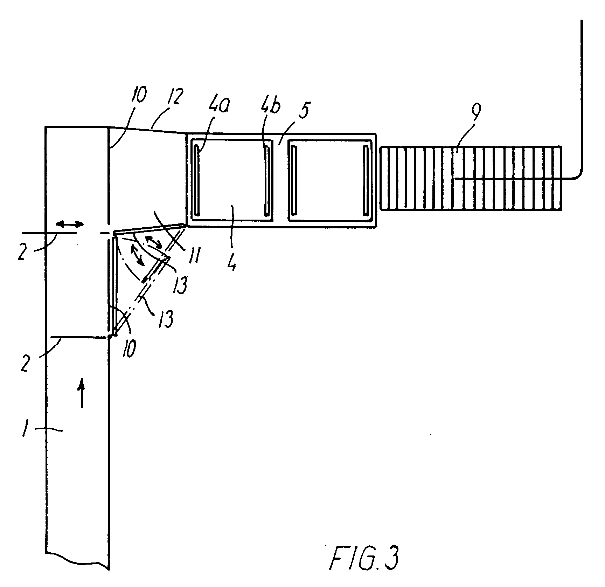

In Fig. 3 a single stunning plant is shown with a stunning pit 5, a transport system and boxes constructed in teh same way as the plant according to Fig. 1a-1d or Fig. 2a-2b. A driving path 1 with two partition walls 2 are provided, which walls can be removed from the path, so that a group of animals may pass into this section of the path and be divided in two groups. The wall 10 opposite each corresponding area may be removed, so that the animals can be led manually or automatically into an intermediate path 11 and into an empty box with open entrance gate 4a. The intermediate path 11 has a fixed, oblique wall 12 and two swingable walls 13 limiting the moving area of the animals. In the position shown of the swingable walls only animals from the area of the driving path placed opposite the box 4 have a possibility to enter the empty box.

A discharge table 9 in form of a conveyor with a laminated surface receives the stunned animals emptied from the right box 4, which like the other boxes has a discharge gate 4b situated opposite the entrance gate 4a of the box, said discharge gate 4b being raisable and lowerable.

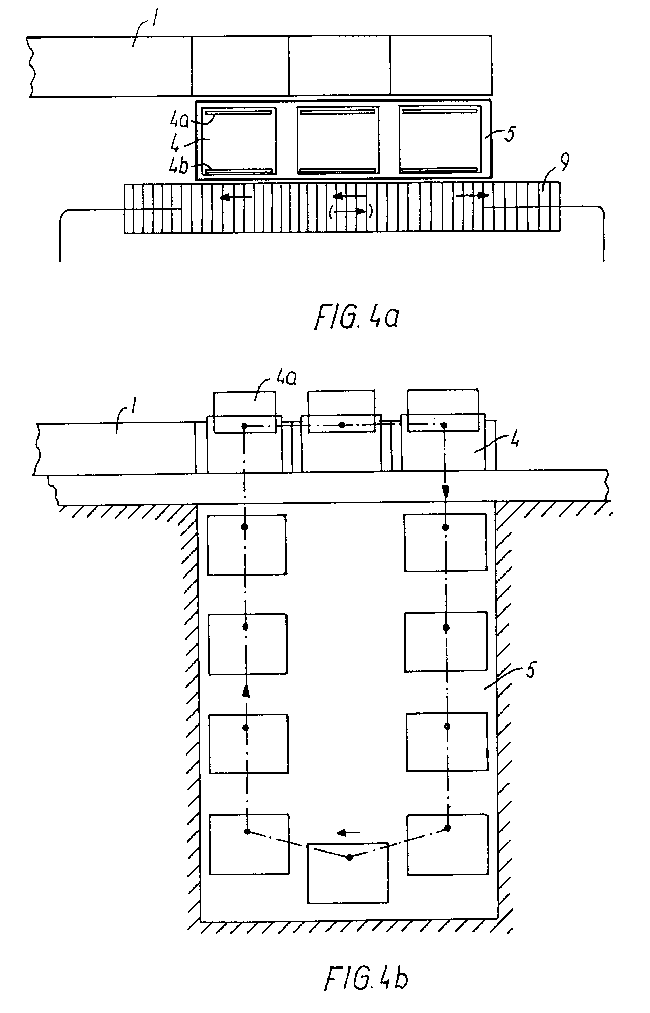

The plant according to Figs. 4a-4b comprises a stunning pit 5, a driving path 1 with a separation system and a discharge table 9 with three transport sections. The plant has 12 boxes 4, which by means of a paternoster system are transported in a cycle between an upper position, in which three boxes in the same cycle are filled with animals from the driving path 1 or discharge stunned animals onto the discharge table 9, and a lower position, in which the remaining boxes are taken through the anaesthetic atmosphere in the pit 5.

The undulating line between the boxes in Fig. 4b indicates that the boxes are interconnected by means of chains taking part in the transport of the boxes. Each box has an entrance gate 4a and a discharge gate 4b, which are placed on opposite sides of the box 4 like in the preceding embodiments.

In this plant three boxes at a time are taken to the uppermost position, in which all three boxes are emptied of stunned animals and thereafter filled again with unstunned animals. When this has happened, all three boxes are taken down into the stunning pit 5, and at the same time a new set of three boxes are brought to the upper position for discharging.

Fig. 4a shows that the plant supplies two conveyor systems. The middle section of the discharge table 9 may be driven both to the right and to the left, so that the stunned animals from the middle box in Fig. 4a can be delivered to the conveyor system, which is most in need.

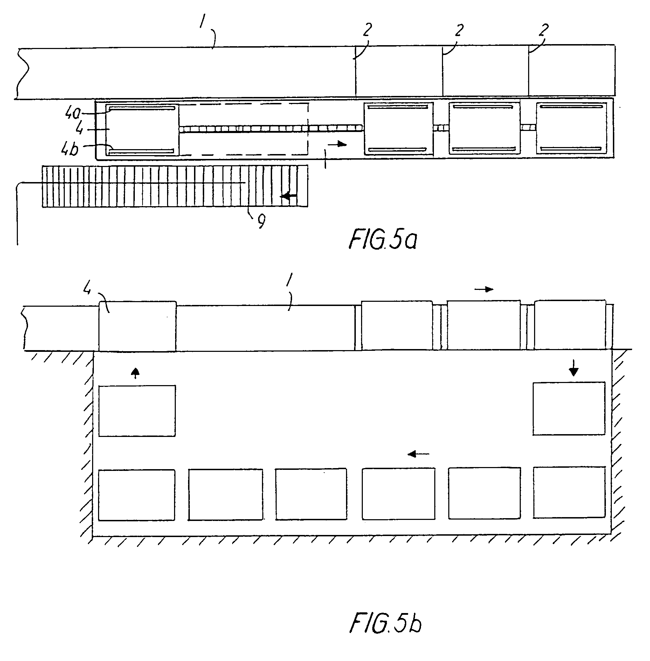

The plant according to Figs. 5a and 5b comprises a driving path 1 with a separation system for a group of animals, an oblong stunning pit 5 and a discharge table 9. What is in particular making this plant different from the preceding ones is that the upper left box in Fig. 5b with stunned animals can be moved independently from the other boxes along the discharge table 9 and during this movement discharges the stunned animals. The animals are thus distributed along the discharge table, which facilitates the job of the chain suspending operation.

The three boxes to the right in Fig. 5a are filled from the side facing the three areas of the driving path, each box having a hoistable entrance gate 4a. In the opposite side of the boxes is a corresponding hoisting gate 4b, through which the stunned animals can be discharged onto the discharge table 9.

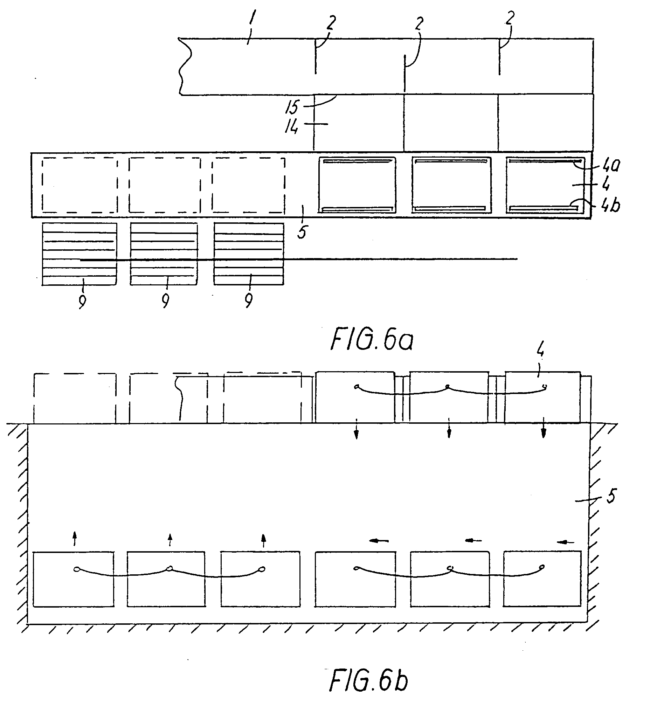

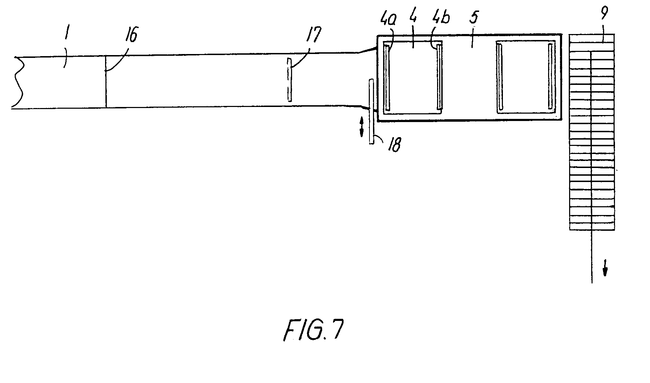

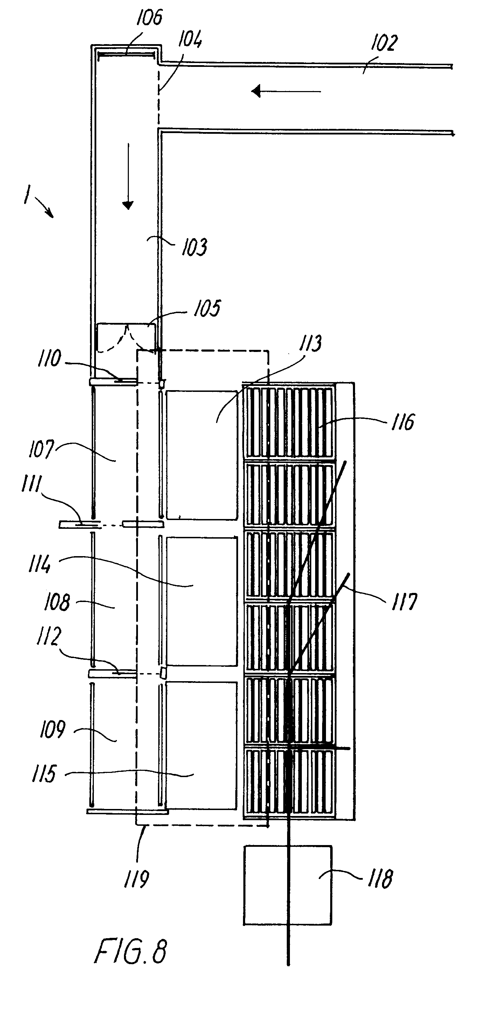

The plant in Figs. 6a-6b comprises a driving path 1 with a separation area, and oblong stunning pit 5 and three discharge tables 9. The boxes, which have a similar construction as the ones described above, with an entrance 4a and an discharge 4b in opposite sides, are connected in groups of three as indicated by the arched lines between the boxes in Fig. 6b. The boxes may take in four position as will be seen from the figure.

The grouping area comprises sliding walls 2 which in the grouping phase take up the partially closed position shown in Fig. 6a, and which after the grouping are completely closed. Opposite each of the three grouping areas of the driving path 1 a waiting area 14 is provided in accordance with this embodiment, to which waiting area the respective groups can be transferred, the partition walls being constituted of hoisting gates 15, and not shown guiding plates for automatic transfer of the animals to the waiting area are provided. When the animals have come to the waiting area, the partition walls 15 close again, and the animals are now ready for transfer to empty boxes arriving to the filling area of the plant opposite the waiting area. The animals are transferred manually or automatically by means of a driving bat. The embodiment with a waiting area ensures that the boxes can be filled with animals as soon as the boxes have arrived. Transfer of animals from the areas in the driving path 1 to the waiting area 14 and/or to the box 4 need not take place simultaneously, but may for instance be initiated as soon as five animals are present in the area in question.

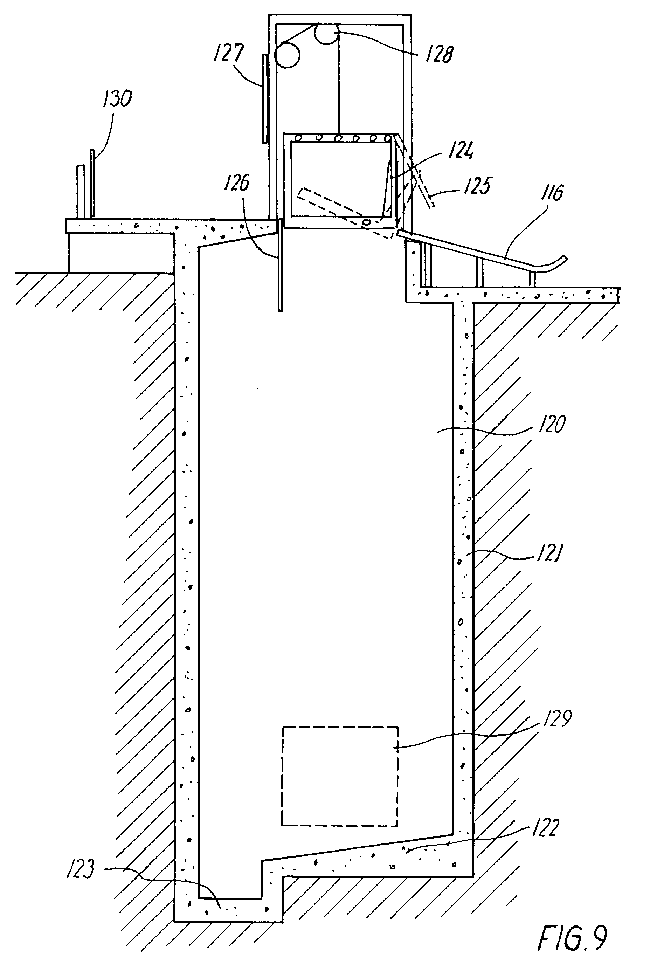

The plant according to Fig. 7 is by and large constructed in the same way as the plant according to Figs. 1a-1c, apart from the fact that the lay-out has been changed thereby that the pit extends into the extension of the driving path. The plant has only one area for a group of animals driven in from the pen area. It is limited rearwards by a gate 16. The animals are divided driven manually into the boxes 4 by an operator using a driving bat 17 for the purpose.

The grouping and the driving in may also take place automatically. In a special embodiment a driving gate 17 may be provided, which is automatically moved towards the right of the driving path, as well as a sliding gate 18, which during the filling of a box only allows one animal at a time to enter the box. In connection with the driving path section a detector may be provided, which registers the total number of animals in the section. It may for instance be the question of a system with video cameras above the section of weighing cells beneath the floor of the section. Each time an animal leaves the section, i.e. enters the box, one is counted down. When for instance a down-counting impulse has been given five times, this means that the box is full and the sliding gate 18 closes automatically simultaneously with the stopping of the movement of the driving gate 17. When an empty box has been placed opposite the section, the filling can be repeated as many times as necessary for clearing the driving path section.

Fig. 8 shows a plant for the stunning of animals to be slaughtered. The plant comprises a grouping area 101, in whihc the animals are divided in a number of groups with essentially the same number of animals in each group. For each grouping an operator drives a number of animals through a comparatively narrow path 102, which bends sharply into an adjacent path 103. At the bend a sliding gate 104 is provided which closes when the desired number of animals has been driven past the gate. In the path a gate 105 is provided, and besides a driving/hoisting gate 104 is provided, which apart from being openable, so the animals can move under the gate, is displaceable towards the gate 105. By means of the driving/hoisting gate 106 it is possible to drive a number of animals into the grouping rooms 107,108,109, which are separated by sliding doors 110,111,112. These folding doors can be opened just so much that the animals one by one can pass through the openings. The animals are taken by the driving/hoisting gate 106 towards the grouping rooms 107,108,109, until a vision system consisting of cameras placed above each of the rooms registers that a group of the desired size has passed the sliding gate 112, whereafter said gate closes. When the vision system registers that the desired number of animals are gathered in room 108, the sliding gate 111 also closes., the gate 110 in the last part of the driving in phase being completely opened. When the remaining number of animals has entered room 107, the sliding gate 110 finally closes. The gate 105 closes, when it is passed by the driving/hoisting gate. The driving/hoisting gate 106 is raised and brought back to the starting position shown in Fig. 8. The sliding gate 104 can now be opened, and a new flock of animals can be taken into the path 103 through the path 102.

By means of the grouping plant briefly described it is possible quietly and substantially without the use of force to perform a grouping of a flock of animals in the three rooms with an equal number of animals in each room. When the grouping has taken place, the animals are to be taken in groups into a box 113,114,115 placed opposite each room. The boxes are adapted to be lowered into a pit containing CO₂. After a stay in the stunning medium the animals are lifted up again and discharged onto a table designed as a roller belt 116 with freely running or driven rollers. Above the table 116 an arrangement 117 for suspending the animals in chains is provided. The arrangement takes the animals to a stitching platform 118, in which the animals are stitched for the draining of blood. From the stitching platform 18 the animals are conveyed further on in the slaughtering process by means of a conventional conveyor.

As will be seen from Fig. 8 three boxes 113,114,115 are placed between the grouping plant 1 and the roller belt 116, onto which the stunned animals are discharged. According to the invention this space saving arrangement is made possible thereby that each of the boxes has an entrance for the animals at one side and a discharge at the opposite side, the boxes from the pit being lifted to a common station for the filling in of the animals and for the discharge thereof. This station is according to the invention placed vertically above the pit, the walls of which below floor level are indicated by means of dotted lines 19.

Fig. 9 shows a section through the plant shown in Fig. 8 in an embodiment which is particularly suited for a socalled reversible stunning of the animals. In connection with such a stunning the animals are to stay for a comparatively short time in the stunning medium, and after the stunning it is a requirement that the animals are stitched and drained for blood, before the stunning looses its effect. In connection with reversible stunning it is possible to attain a cycle of approx. 125 seconds, which by use of three boxes each being filled with a group of 5 animals, gives a capacity of 400 animals per hour. This capacity is attractive to a number of slaughterhouses, in which slaughter lines with a capacity of this order has recently been installed.

In Fig. 9 a pit 120 will be seen with walls 121 and a bottom 122 provided with a collecting furrow 123 which is somewhat deeper than the bottom 122 sloping towards the furrow 123. The box 124 is shown in its uppermost position, and with punctured lines it has been indicated how the bottom of the box can be tilted for the discharge of the stunned animals. Simultaneously with the discharging the side gate 125 facing the roller belt 116 is opened, which ensures a quick and effective discharge, the box becoming ready for the introduciton of a new group of animals through the entrance placed at the opposite side. The box is provided with a lowerable door 126, which can be opened in the uppermost position of the box, and between the grouping area and the box a hoisting gate 127 is provided, said gate being, when open, lowered into the pit and, when closed, lifted up in front of the entrance to the box 124. The box is provided with a hoisting winch 128 with a hoisting wire, which can at the opposite end be provided with a counterweight in the way commonly used in elevators. When the animals are introduced into the box, it is lowered to the position 129 shown with dotted lines in the lower part of the pit. In this part of the pit an inlet for CO₂, which is heavier than normal atmosphere, is provided. By supplementing as shown, a concentration of minimum 70% can be maintained in the lower part of the pit. In connection with a socalled reversible stunning, the concentration should be higher, preferably 88-98%.

The introduction of the animals into the box is preferably made by means of a sliding wall 130, adapted to be moved towards the entrance of the box, when the desired number of animals are present in the grouping room. This measure ensures first and foremost that the animals do not run out of the box 124, before the gates are closed, an aim being by choosing a suitable colour or lighting, that the animals of their own accord should go into the box. It is therefore preferred that the box of the wall opposite the entrance is closed with a grate with comparatively big openings instead of a solid wall.

Besides, it is preferred that the box, when in its uppermost position, is surrounded by a covering, through which air can only penetrate with difficulty. The covering closest to the table 16, onto which the animals are discharged, can be a lamellar curtain. The ceiling and bottom 124 of the box is a grating, the ceiling having comparatively big openings, whereas the bottom is provided with a big number of comparatively small holes, through which stunning medium can pass. Moreover, the bottom allows liquid manure to run down into the bottom of the pit, from where it can be pumped for depositing in a tank. The walls, through which air only penetrate with difficulty, act as a chamber pressing the remaining CO₂ out of the box, when it is lifted up from the pit, and cause reversely, when the box is lowered, CO₂ to be sucked into the box. Besides, the group is designed with so big distance between the opposite walls that the turbulence caused by lowering or lifting of the box is limited.

The design of the box as an elevator moving approximately vertically up and down, opens up the possibility of letting the supply of additional stunning medium take place in the box itself, the supply of medium being controlled in such a way, that it only takes place during the time, in which the box is completely lowered.

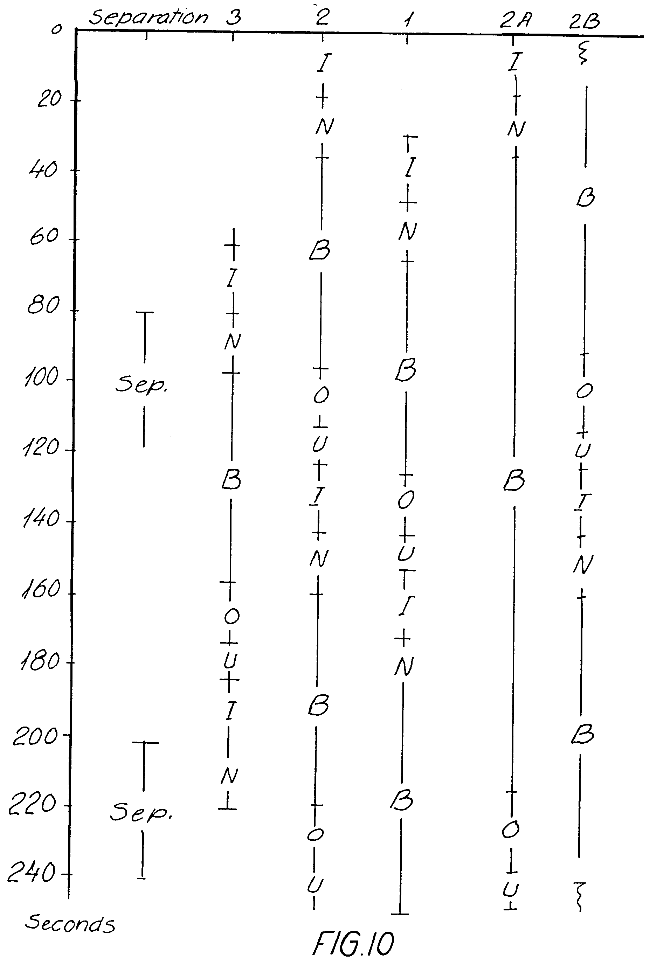

Fig. 10 is a time table showing how with a cycle time of 123 seconds it is possible to ensure sufficient time for both a grouping and for an operator to get time between the discharge to suspend the stunned animals in chains and to move between the alternating discharge places at the roller belt. It will be seen that if the introduction of the animals into the boxes 101 and 103 is expedited a few seconds in relation to a division in three of the cycle, extra time for the grouping will be provided, if necessary. The time schedule is preferably adjusted in such a way that the average grouping time will determine the time space between the succeeding boxes. By such a speeding up of the time schedule it becomes possible, with a trained operator for the suspension in chains, in certain cases to attain a bigger number of animals in one of the boxes, which may mean a not insignificant increase of the capacity of the plant per hour.

In Fig. 10 a time table for two boxes is shown, said boxes being lifted alternatingly to the common discharge and filling station. If the box 124 is doubled, the pit being made sufficiently wide at the bottom for two boxes to be lowered, the two boxes may in front of each station operate alternating as indicated by the lines 2A and 2B. It will be seen that grouping, filling and emptying of the two times three boxes can take place in the same way as by alternating operation between three boxes 1, 2, and 3, but the staying time at the bottom of the pit becomes approximately thrice as long. In this arrangement a deeper pit is required, but the space requirement in level with the grouping will be the same as by alternating operation with only three boxes.

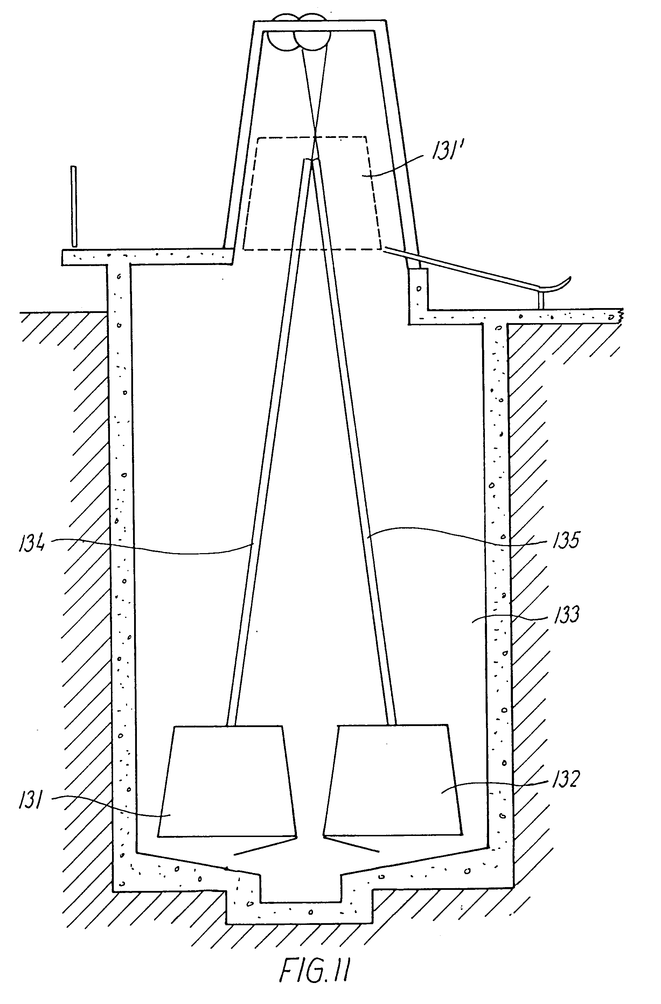

Fig. 11 shows a section through a plant with two boxes 131,132 at each station. In Fig. 11 the two boxes are shown in lowered position, but in the discharge and the filling station a box 131' is shown with dotted lines, said box being ready to be filled. It is a prerequisite for the arrangement that the pit 133 has a big width, and that the boxes are provided with guideways 134,135 runnning under a small angle to vertical. On account of the uppermost position of the doors of the boxes it may be advantageous that the boxes have a trapezoidal cross-section as shown in Fig. 11. It may in this arrangement be particularly advantageous to introduce CO₂ in the boxes themselves, while they are lowered.

In Fig. 10 a time table for one of the stations of this plant is shown. If the box 120 according to Fig. 8 is doubled, the pit being at the bottom made sufficient wide for two boxes to be lowered, the two boxes may operate alternating opposite each station, as indicated by the lines 2A and 2B. It will be seen that grouping, filling and emptying of the two times three boxes can take place in a similar way as by alternating operation between three boxes 1,2, and 3, while the staying time at the bottom of the pit becomes approximately thrice as long. This arrangement requires a deeper pit, but the space requirement in level with the grouping is the same as by alternating operation with only three boxes.

It will be understood that the constructions in the above plants may be combined mutually in other ways than those expressly shown, and also with other known constructions with a similar function. All such combinations likewise fall within the scope of the invention.

## Claims

1. A plant for the stunning of animals to be slaughtered at a slaughterhouse, said plant comprising a system of boxes (4,113,114,115,132,133) which are movable between a filling area, in which the animals are led into a box, a stunning pit with an anaesthetic atmosphere for animals to be slaughtered and an area, in which the stunned animals are discharged from the box onto a table (9,116), which boxes (4,113,114,115,132,133) share a common floor area, on which at least three animals to be slaughtered can move around, and a wall (4a,126) which is opened in connection with the filling so that the animals can be led into the box,
**characterized** in that a wall (4b,125) opposite the first wall, which has been opened in connection with the filling (4a,126), is opened in connection with the emptying of stunned animals from the box.

2. A plant according to claim 1, **characterized** in a common station for the filling of the animals into a box and for the emptying of the stunned animals from the boxes, after the animals have been lifted up from the pit to the station.

3. A plant according to claim 1 or 2, **characterized** in that the boxes are placed side by side opposite the room of the grouping area and are separately lowerable into the pit containing the anaesthetic.

4. A plant according to claims 1, 2 or 3, **characterized** in that the boxes are only moved in an approximately vertical direction in the pit.

5. A plant according to claims 1, 2, 3 or 4, **characterized** in that the pit below the level of the grouping area has a substantially bigger horizontal cross section than the boxes.

6. A plant according to any of the claims 1 - 5,
**characterized** in that for each room in the pen area two boxes are provided, which from the common station is lowerable to each theirs of two adjacent stunning positions at the bottom of the pit.

7. A plant according to any of the claims 1 - 6,
**characterized** in that in their uppermost position the boxes are surrounded by walls impeding air passage, the wall closest to the discharge opening being preferably a laminated wall.

8. A plant according to any of the claims 1 - 7,
**characterized** in that the table, onto which the animals are discharged, is a conveyor with loose or driven rollers.

9. A plant according to any of the claims 1 - 8,
said plants being provided with means for supplying a stunning medium for maintaining an anaesthetic atmosphere in the pit, **characterized** in that the boxes are provided with an inlet for stunning medium, an essential part of the additional stunning medium to the pit being supplied in the lowered position of the boxes.

10. Method for the stunning of animals to be slaughtered at a slaughterhouse in a plant comprising a system of boxes (4,113,114,115,132,133) which are movable between a filling area, in which the animals are led into a box, a stunning pit with an anaesthetic atmosphere for animals to be slaughtered and a discharge area, in which the stunned animals are discharged onto a table (9,116), which boxes (4,113,114,115,132,133) share a common floor area, in which at least three animals to be slaughtered can move around, and a wall (4a,126) which is opened so that the animals in connection with the filling can enter the box,
**characterized** in that a wall (4b,125) opposite the first wall, which has been opened in connection with the filling (4a,126), is opened in connection with the emptying of stunned animals from the box.

11. Method according to claim 10, **characterized** in that the filling of the animals into a box and the emptying of the stunned animals from the box take place in a common station.

12. Method according to claim 11, **characterized** in that the lowering of the individual boxes is made alternately.
